(19) Europäisches Patentamt
European Patent Office
Office européen des brevets

(11) Veröffentlichungsnummer: **0 085 379**
**A2**

(12) # EUROPÄISCHE PATENTANMELDUNG

(21) Anmeldenummer: **83100594.7**

(22) Anmeldetag: **24.01.83**

(51) Int. Cl.$^3$: **C 09 D 3/58**
C 09 D 5/34, C 08 K 5/17

(30) Priorität: **27.01.82 DE 3202491**

(43) Veröffentlichungstag der Anmeldung:
**10.08.83 Patentblatt 83/32**

(84) Benannte Vertragsstaaten:
**DE FR GB**

(71) Anmelder: **HOECHST AKTIENGESELLSCHAFT**
**Postfach 80 03 20**
**D-6230 Frankfurt/Main 80(DE)**

(72) Erfinder: **Matheis, Werner**
**Finkenweg 20**
**D-6231 Schwalbach(DE)**

(72) Erfinder: **Petri, Willi**
**Butznickelweg 30**
**D-6230 Frankfurt am Main 80(DE)**

(72) Erfinder: **Semmler, Hans-Joachim, Dr.**
**Schwedenstrasse 41**
**D-6203 Hochheim am Main(DE)**

(54) **Kalthärtende Spachtel-, Anstrich- und Kittmassen.**

(57) Gemische die ein Epoxidharz und ein polycyclisches Polyamin, gegebenenfalls zusammen mit anderen Aminhärtern, Füllstoffen, Verdünnern und Farbstoffen enthalten, eignen sich als kalthärtende Spachtel-, Anstrich- und Kittmassen für den Säureschutz von Behältern, Böden und Wänden.

EP 0 085 379 A2

## Kalthärtende Spachtel-, Anstrich- und Kittmassen

Die Erfindung betrifft die Verwendung von polycyclischen Polyaminen als Härter für Epoxidharze in Spachtel-, Anstrich- und Kittmassen.

Epoxidharze, auch Äthoxylinharze genannt, werden zunehmend zur Herstellung von Gießkörpern verwendet. Hierzu werden sie hauptsächlich im Gemisch mit Härtern (2 Komponenten-System) als Gießharz eingesetzt. Die Herstellung von Epoxidharzen ist vielfach beschrieben worden, z.B. in Ullmann Enzyklopädie der technischen Chemie, 3. Auflage, Band 8, Seite 431 - 436).

In vielen Fällen wird 4,4-Dihydroxydiphenyldimethylmethan mit Epichlorhydrin zu polymeren Glycidäthern umgesetzt und das entstehende Epoxidharz in Gegenwart von Säureanhydriden oder Aminen gehärtet. Derartige Harzsysteme sind auch Grundbestandteil von Spachtel-, Anstrich- und Kittmassen. Diese Massen werden in einigen Fällen in Form von 2 Komponenten-Systemen (Epoxidharz und Härter) eingesetzt. In den meisten Fällen werden zusätzlich Verdünner, wie z.B. Xylol oder Furfurylalkohol oder reaktive Verdünner wie Trioxan sowie Füllstoffe, wie z.B. Graphit oder Quarzmehl den Massen beigefügt ( 3 Komponenten-Systeme).
Als Härter werden für Kitt-, Anstrich- und Spachtelmassen meist Amine verwendet. Bekannt ist unter anderem der Einsatz von Cyclohexylaminopropylamin, Diethylendiamin, Diethylentriamin, Triethylentetramin, m-Phenylendiamin, hydriertes m-Phenylendiamin, Aminoethyl-piperazin polymere mehrwertige Alkylamine sowie N-Hydroxyethylpropylendiamin, N-Hydroxy-propyl-propylendiamin, N,N'-Bishydroxyethyl-dipropylentriamin, N-Hydroxyethyl-

0085379

diethylentriamin, N-Hydroxypropyl-diethylentriamin.

Das Molverhältnis Epoxidgruppe : Aminogruppe beträgt etwa 0,5 : 1 bis 2 : 1. Jedoch hängt das Verhältnis der Einzelkomponenten etwas vom Einsatzzweck, insbesondere der gewünschten Verarbeitungszeit und der Viskosität ab. Beispielsweie wird man für eine dünne Spachtelung meist ein Teil Glycidharz mit 0,2 Teilen Härter (z.B. auf Basis Diaminocyclohexan) und etwa 6 Teilen Füllmehl vermischen. Zur Verringerung der Viskosität kann gegebenenfalls noch etwa 0,1 Teil Verdünner (z.B. Xylol zugegeben werden).
Soll der Kitt mehr Steifigkeit erbringen, so muß der Anteil an Füllmehl auf etwa 7 Teile pro Teil Glycidharz erhöht werden. An Stelle des häufig benutzten Quarzmehls können naturgemäß auch andere chemisch beständige Stoffe wie Sand, Graphit oder Schwerspat als Füllstoff verwendet werden. Die für eine Kittmasse oder einen dünneren Spachtelansatz notwendigen Komponenten (Harz, Härter, Verdünner und Füllstoff) müssen in ihren Mengen so aufeinander abgestimmt sein, daß nicht nur eine beständige Kittung sondern auch nicht zu kurze Verarbeitungszeiten und nicht zu lange Härtungszeiten des Kittes resultieren. Verarbeitungszeiten oder Härtungszeiten werden in der Hauptsache durch die Menge des Härters einreguliert. Toxische Verbindungen sollen für den Härter nicht eingesetzt werden. Aus der DE-AS 1 139 268 ist bekannt, daß Poly-alkylenimine sich gut zum Härten von Epoxidharzen eignen, aber nur zu Massen mit niedriger Chemikalienbeständigkeit führen. Aus der DE-AS 1 022 004 ist die Verwendung von Aminoalkoholen mit nur geringer Toxizität als Härter bekannt. Jedoch ist auch hier die Chemikalienbeständigkeit der erhaltenen Massen noch nicht optimal. Aus der US-PS 3 898 251 ist bekannt, daß sich die Verbindung 4,4'-Diaminodiphenylmethan als Härter einsetzen läßt. Nachteilig ist hierbei neben der höheren Toxizität

des Amins auch eine Tendenz zur Bildung von unerwünschten Färbungen der gehärteten Masse. Diese Farbenänderungen treten zudem sehr langsam auf und erschweren es größere Teile mit gleichmäßiger Färbung auszuführen.

Das Problem einen passenden Härter auf Aminbasis zu finden, ist besonders gravierend für kalthärtende Systeme (Anstrich-, Kitt- und Spachtelmassen). Kalthärtende Massen werden häufig im Säureschutzbau eingesetzt, so daß an sie besonders hohe Anforderungen bezüglich Chemikalienbeständigkeit gestellt werden. Die Chemikalienbeständigkeit spielt bei den heißhärtenden Systemen, die insbesondere im Lacksektor eingesetzt werden, eine kleinere Rolle. Dort kommt es in der Hauptsache auf gute mechanische Eigenschaften wie Biegefestigkeit oder Schlagzähigkeit an.
Es bestand daher die Aufgabe die Chemikalienbeständigkeit von kalthärtenden Systemen, die zum Säureschutz von Behältern und Wänden dienen, zu verbessern.
Die vorliegende Erfindung löst diese Aufgabe.

Es wurde nun gefunden, daß sich Gemische, die einen Füllstoff, ein Epoxidharz und polycyclisches Polyamin, gegebenenfalls zusammen mit anderen Aminhärtern, reaktiven Verdünnern und Farbstoffen enthalten, bei Temperaturen von max. 50°C als kalthärtende Spachtel-, Anstrich- und Kittmassen zum Säureschutz von Behältern und Wänden einsetzen lassen.
Es ist zwar bekannt, daß sich Bis-aminomethyl-tricyclo [$5.2.1.0^{2.6}$]-decan auf dem Epoxidharz-Sektor als Heißhärter einsetzen läßt und dabei Epoxid-Polyaddukte mit hervorragenden mechanischen Eigenschaften gebildet werden. (leaflet on TCD products - TCD Diamine, Hoechst June 1980).
Es ist jedoch überraschend, daß polycyclische Polyamine beim Einsatz als Kalthärter zu Massen mit hervorragender chemischer Beständigkeit führen.

Die Menge der eingesetzten Füllstoffe hängt ab von der Dichte des Füllstoffs und der gewünschten Steifigkeit der Kitt- oder Spachtelmasse. Eine Kitt- oder Spachtelmasse wird etwa bis 20 bis 40 Gew.-% Ruß oder 50 bis 70 Gew.-% Koks-Pulver oder 70 bis 90 Gew.-% Quarzpulver enthalten. In Anstrichmassen können die Füllstoffe auch fehlen.

Erfindungsgemäß können alle üblichen Epoxidharze Verwendung finden. Bevorzugt sind solche Epoxidverbindungen, die durch Umsetzung von Epichlorhydrin mit mehrwertigen Hydroxyverbindungen, wie z.B. Bisphenol A, entstehen.

Neben den erfindungsgemäß eingesetzten polycyclischen Polyaminen können auch andere an sich bekannte Aminhärter eingesetzt werden. Jedoch soll (bezogen auf die Menge der Aminogruppen) der Anteil des polycyclischen Polyamins mindestens 50 Mol-% betragen.

Zur Verringerung der Viskosität der hergestellten Massen können reaktive Verdünner auf Basis von Trioxan (DE-AS 1 495 709) oder Lösungsmittel wie Xylol eingearbeit werden.

Die Kitt-, Spachtel- und Anstrichmassen können durch Zugabe von Farbstoff, insbesondere von Mineralfarben, eingefärbt werden. Durch Zusatz von Titandioxyd lassen sich weiße, durch Zusatz von Ruß schwarze und durch Zusatz von Titandioxyd und Ruß graue Färbungen erzielen.

Die Gemische aus Epoxydharz, cyclischem Polyamin und anderen Komponenten werden bei Temperaturen von max. 50°C, vorzugsweise 5 bis 40°C, insbesondere 15 bis 30°C zubereitet und verarbeitet, d.h. auf die betreffenden Behälter, Böden und Wände aufgebracht.

Das erfindungsgemäß eingesetzte polycyclische Polyamin enthält im Mittel mehr als 1,5 Aminogruppen pro Molekül und vorzugsweise 1,6 bis 3 Aminogruppen pro Molekül. Besonders bevorzugt ist der Einsatz von Produkten, die im Mittel 2 Aminogruppen pro Molekül aufweisen. Die Gegenwart geringer Anteile an Monoaminen stört nicht, sofern nur genügend Polyamin vorhanden ist. Das Molverhältnis Aminogruppen :

Epoxidgruppen soll 0,95 bis 1,25, vorzugsweise 1,0 bis 1,15 betragen.

Sofern die eingesetzten polycyclischen Polyamine tricyclische oder höher cyclische Verbindungen darstellen, ist es bevorzugt, wenn die Aminogruppen an verschiedenen Ringen sitzen. Die eingesetzten Polyamine können primäre, sekundäre und/oder tertiäre Aminogruppen tragen. Bevorzugt sind primäre und sekundäre Aminogruppen, insbesondere primäre Aminogruppen.

Die primären Aminogruppen des polycyclischen Polyamins können an primären, sekundären oder tertiären Kohlenstoffatomen sitzen. Bevorzugt ist der Einsatz von polycyclischen Polyaminen, die sich von Kohlenwasserstoffen ableiten, die gesättigt sind und keine aromatischen Ringe aufweisen.

Das polycyclische Polyamin soll 2 bis 5, vorzugsweise 2 bis 4, besonders bevorzugt 2 bis 3 Ringe im Molekül aufweisen. Ein bevorzugter Molekulargewichtsbereich für das polycyclische Polyamin liegt bei 150 bis 350. Es ist ferner bevorzugt, wenn der Kohlenwasserstoff, von dem das polycyclische Polyamin sich ableitet, völlig aus Ringen mit 5 oder 6 Kohlenstoffatomen aufgebaut ist.

Die erindungsgemäß eingesetzten Kitt-, Spachtel- und Anstrichmassen sind beständig gegenüber besonders kritischen Chemikalien wie Ameisensäure, Milchsäure, Essigsäure in den üblichen Konzentrationen und gegenüber Lösungsmitteln wie Methylacetat und Aceton.

Besonders bewährt haben sich die folgenden polycyclischen Polyamine

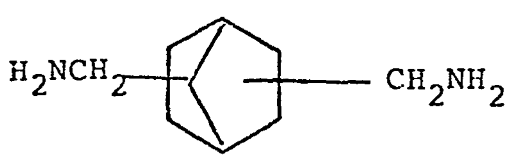

Bis(aminomethyl)norborman

$(C_9H_{18}N_2)$

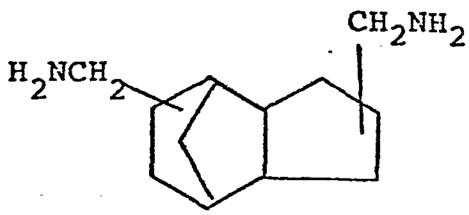

Bis(aminomethyl)-2,3-trimethylennorbornan; Bis-aminomethyl-tricyclo/5.2.1.0$^{2.6}$7-decan; $C_{12}H_{22}N_2$

Diese Norbornan-Derivate liegen üblicherweise als Gemisch verschiedener Isomere vor. Sie können auch in Mischungen mit anderen polycyclischen Polyaminen eingesetzt werden.

Die beschriebenen Epoxidharz-Aminhärter-Kombinationen können zu Spachtelschichten (z.B. 4 bis 7 mm Dicke, mit oder ohne Glasfasereinlagen), zu streich- oder spritzfähigen Anstrichen (Schutzüberzügen) oder zu Verlege- und Verfugekitten verwendet werden.

Die Erfindung wird durch die Beispiele näher erläutert.

## Beispiel 1

670 Teile Quarzmehl mit dem Kornspektrum

| | | | | |
|---|---|---|---|---|
| 2 | - | 1 | mm | 6 Gew.-% |
| 1 | - | 0,75 | mm | 19 Gew.-% |
| 0,75 | - | 0,3 | mm | 9 Gew.-% |
| 0,3 | - | 0,15 | mm | 26 Gew.-% |
| 0,15 | - | 0,1 | mm | 10 Gew.-% |
| | $<$ | 0,1 | mm | 30 Gew.-% |

100 Teile Epoxidharz (Kondensationsprodukt von Bisphenol A und Epichlorhydrin) und

17 Teile Bis-aminomethyl-norbornan (Äquivalentverhältnis Aminogruppen / Epoxidgruppen 1.0 : 1)

wurden bei Raumtemperatur vermischt und zu

Prüfflächen und zylindrischen Prüfkörpern (Durchmesser und Höhe je 2.5 cm) verarbeitet.

Die Shore-Härte D betrug 75, die Druckfestigkeit 109 $N/mm^2$ der Martenswert (DIN 53458) 50°C.

Beispiel 2

Beipiel 1 wurde wiederholt, jedoch wurden diesmal 22.5 g Bis-aminomethyl-2.3-trimethylennorbornan als Härter eingesetzt. Die Shore-Härte D betrug 85, die Druckfestigkeit 95 $N/mm^2$, der Martenswert 48 - 40°C.

Vergleichsbeispiel

Beispiel 1 wurde wiederholt, jedoch wurden diesmal 23.4 g N-Cyclohexyl-1,3-propylendiamin als Härter eingesetzt. Die Shore-Härte D betrug 70, die Druckfestigkeit (Mittelwert) 90 $N/mm^2$. Der Martenswert lag unter 30°C.

Die Beständigkeit der erhaltenen Massen gegenüber Lösungsmitteln die erfahrungsgemäß besonders aggresiv sind, geht aus der folgenden Tabelle hervor.

| Beständigkeit gegen | Vergleichsbeispiel | Beispiel 1 | Beispiel 2 |
|---|---|---|---|
| Methylacetat | - | + | + |
| 3-10 % Essigsäure | - | + | + |
| Aceton | - | + | + |
| 3-10 % Milchsäure | - | + | + |
| verdünnte Mineralsäuren | + | + | + |
| " Alkalien | + | + | + |

Patentansprüche:

1. Verwendung eines Gemisches enthaltend ein Epoxidharz und mindestens ein polycyclisches Polyamin, gegebenenfalls zusammen mit anderen Aminhärtern, Füllstoffen, Verdünnern und Farbstoffen bei Temperaturen unter 50°C als kalthärtende Spachtel-, Anstrich- und Kittmasse zum Säureschutz von Behältern, Böden und Wänden.

2. Ausführungsform gemäß Anspruch 1, dadurch gekennzeichnet, daß als Epoxidharz ein 4,4'-Dihydroxydiphenyldimethylmethanglycidether-Harz eingesetzt wird.

3. Verfahren zum säurefesten Verfugen, Verspachteln und Beschichten von Behältern, Böden und Wänden mit einem Gemisch aus Epoxidharz und Amin, gegebenenfalls zusammen mit Füllstoffen, Verdünnungsmitteln und Farbstoffen, wobei man dieses Gemisch aus den Bestandteilen bei Temperaturen von max. 50°C zubereitet und es bei Temperaturen von max. 50°C auf die Behälter, Böden und Wände aufbringt, dadurch gekennzeichnet, daß als Amin mindestens teilweise ein polycyclisches Polyamin eingesetzt wird.

4. Verfahren nach Anspruch 3, dadurch gekennzeichnet, daß als polycyclisches Polyamin ein bicyclisches oder tricyclisches Amin verwendet wird.

5. Verfahren nach Anspruch 4, dadurch gekennzeichnet, daß das bicyclische oder tricyclische Amin 2 Aminogruppen enthält.

6. Verfahren nach Anspruch 4, dadurch gekennzeichnet, daß das polycyclische Polyamin 2 an Kohlenstoff gebundene primäre Aminogruppen, insbesondere 2 Aminomethyl-gruppen enthält.

7. Verfahren nach Anspruch 3, dadurch gekennzeichnet, daß als polycyclisches Polyamin ein Bicycloheptan-diamin eingesetzt wird.

8. Verfahren nach Anspruch 7, dadurch gekennzeichnet, daß als Bicycloheptan-diamin ein Bis-aminomethyl-norbornan eingesetzt wird.

9. Verfahren nach Anspruch 3, dadurch gekennzeichnet, daß als polycyclisches Polyamin ein Tricyclodecan-diamin eingesetzt wird.

10. Verfahren nach Anspruch 9, dadurch gekennzeichnet, daß als Tricyclodecan-diamin ein Bis-aminomethyl-2,3-trimethylennorbornan verwendet wird.